Europäisches Patentamt

European Patent Office

Office européen des brevets

(11) Veröffentlichungsnummer : **0 111 589**
**B1**

(12) **EUROPÄISCHE PATENTSCHRIFT**

(45) Veröffentlichungstag der Patentschrift :
28.05.86

(21) Anmeldenummer : **82111952.6**

(22) Anmeldetag : **23.12.82**

(51) Int. Cl.⁴ : **B 65 G 53/52, F 16 L 57/00**

·⑤ **Krümmerelement.**

(43) Veröffentlichungstag der Anmeldung :
**27.06.84 Patentblatt 84/26**

(45) Bekanntmachung des Hinweises auf die Patenterteilung : **28.05.86 Patentblatt 86/22**

(84) Benannte Vertragsstaaten :
**AT BE CH DE FR GB IT LI NL SE**

(56) Entgegenhaltungen :
WO-A-82 /043 02
CH-A-   599 017
DE-A-    34 304
DE-C-   353 695
DE-C-   501 591
DE-C-   581 068
DE-C- 1 096 830
DE-C- 1 102 040
DE-U- 1 813 072
FR-A-   799 312

(73) Patentinhaber : **Stanelle, Karl-Heinz**
**Rosenstrasse 4**
**D-7129 Güglingen 2 (DE)**

(72) Erfinder : **Stanelle, Karl-Heinz**
**Rosenstrasse 4**
**D-7129 Güglingen 2 (DE)**

(74) Vertreter : **Hach, Hans Karl, Dr.**
**Tarunstrasse 23**
**D-6950 Mosbach-Waldstadt (DE)**

Jouve, 18, rue St-Denis, 75001 Paris, France

## Beschreibung

Die Erfindung betrifft ein Krümmerelement für den Einsatz in pneumatisch, rieselfähiges Gut fördernden Anlagen mit zwei Muffen an beiden Enden, die hinsichtlich ihrer Strömungsrichtung um 90 Grad gegeneinander versetzt sind, und mit einem Krümmerbogen zwischen den beiden Muffen, der eine Auswölbung aufweist, die sich, bezogen auf die Ebene der Strömungsumlenkung radial nach außen und zu beiden Seiten erstreckt.

Bei Krümmerlementen unterliegt, bedingt durch Zentrifugal- und Corioliskräfte, der, bezogen auf die Strömungsumlenkung, radial außen gelegene Wandbereich erhöhtem Abrieb. In der Auswölbung lagert sich Fördergut ab, das die dahinter liegenden Wandbereiche vor dem Abrieb durch das vorbeiströmende Fördergut schützen kann.

Bei einem aus der DE-C-1 096 830 bekannten Krümmerelement der eingangs genannten Art geht die Auswölbung stufenlos und glatt in die ausströmseitige Muffe über. Die Ablagerungen in der Auswölbung können deshalb leicht abströmen und schützen dann nicht mehr.

Aufgabe der Erfindung ist es, bei einem Krümmerelement der eingangs genannten Art der Zerstörung durch Abrieb möglichst entgegenzuwirken.

Die Lösung dieser Aufgabe ist im Kennzeichen des Anspruchs 1 angegeben. Durch das Hemmnis wird die Ablagerung vom unerwünschten Abströmen aus der Auswölbung zurückgehalten. Die zurückgehaltene Ablagerung wird unter Umständen umgewälzt und ausgetauscht. Dabei entstehender Abrieb ist erheblich niedriger als der Abrieb, der entstehen würde, wenn die betreffenden Wände nicht durch die Ablagerung geschützt wären. Diesem so reduzierten Abrieb begegnet die Erfindung durch die vorgesehene Verstärkung der betreffenden Wandabschnitte. Bei der genannten DE-C-1 096 830 sind die in Frage stehenden Wandstücke alle gleich stark ausgebildet.

Bei WO 82/04302 ist eine Auswölbung vorgesehen, die sich nur radial nach außen aber nicht zu beiden Seiten erstreckt. Die Seitenpartien sind deshalb nicht durch Ablagerung geschützt. Die Auswölbung endet mit einem gegen die Strömung gerichteten Hemmnis, das aber im Abstand gegenüber der austrittseitigen Muffe angeordnet ist, so daß das austrittseitige Ende des Krümmerbogens überhaupt nicht geschützt ist.

In der DE-C-501 591 ist ein Krümmer beschrieben, der ebenfalls keine seitlichen Auswölbungen aufweist. Am Ende der Erweiterung befindet sich eine Stufe, die im Gegensatz zu dem Hemmnis nach der Erfindung keine Tasche bildet und damit auch nicht die Schutzfunktion der Tasche. Zwischen der Stufe am austrittseitigen Ende der Auswölbung und der austrittseitigen Muffe erstreckt sich ein ungeschütztes Rohrstück.

Vorzugsweise wird das Krümmerelement als Gußteil ausgebildet. Dann nämlich kann man die Innen- und Außenform in Abhängigkeit von den Förderbedingungen und dem zu fördernden Gut im Sinne der eingangs genannten Aufgabenstellung geometrisch optimieren. Dabei empfiehlt sich Gußstahl in Form von Kugelgraphitguß, der durch Beimischung von Mangan oder dergleichen hochverschleißfest ist. Am besten ist es, den ganzen Krümmer einschließlich der Anschlüsse einstückig aus Stahl zu gießen.

Die Anschlüsse können Muffen und/oder Flansche sein. Es können zusätzlich Reduzierstücke und Versatzstücke von einem Muffenanschluß auf einen Flanschanschluß und umgekehrt vorgesehen sein. Bevorzugt ist eine Ausgestaltung mit Muffen an beiden Enden, in die man dann, wenn ein Flanschanschluß gewünscht wird, mit einem Flansch ausgestattete Versatz- oder Reduzierstücke einsetzen kann.

Die Erfindung wird nun anhand der beigefügten Zeichnung näher erläutert.

In der Zeichnung zeigt :

Figur 1 ein Krümmerelement nach der Erfindung im Längsschnitt,

Figur 2 und 3 die Querschnitte II und III aus Figur 1,

Figur 4 das Krümmerelement in Ansicht aufgebrochen,

Figur 5 ein Reduzierstück für dieses Krümmerelement, und

Figur 6 ein Versatzstück mit einem Flansch für dieses Krümmerelement.

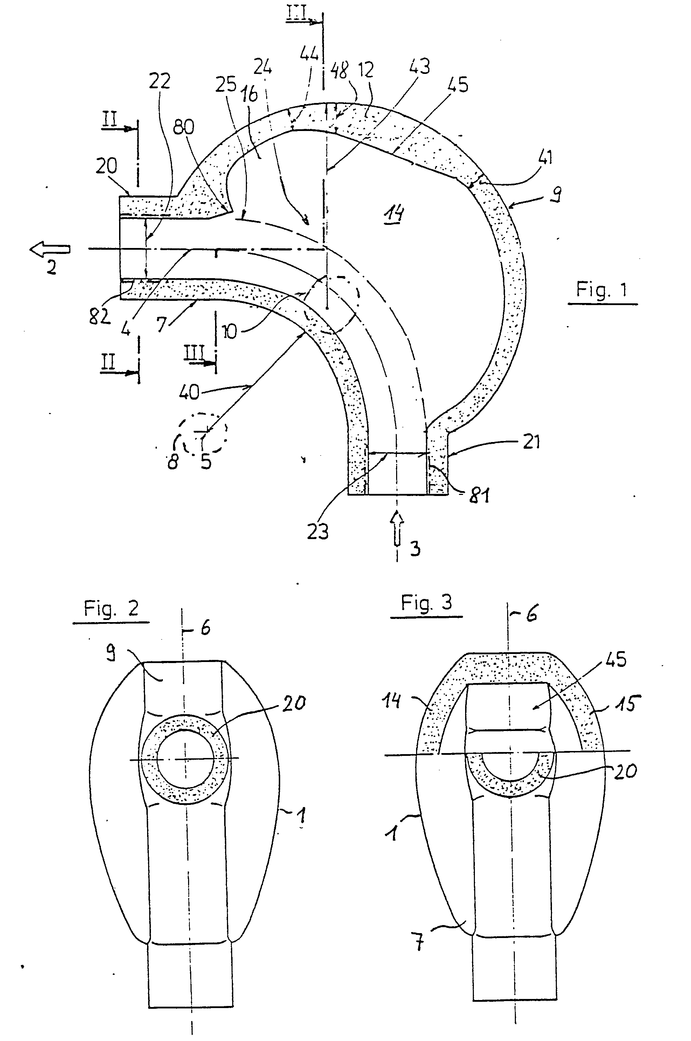

Das Krümmerelement 1 aus Figur 1 vollzieht eine Strömungsumlenkung um 90°. Dementsprechend ist die Strömungsrichtung 3 an der Eingangsseite zur Strömungsrichtung 2 an der Ausgangsseite senkrecht. Die Strömungsumlenkung 4 ist ein strichpunktiert eingezeichneter Kreisbogen, zu dem die Strömungsrichtungen 2 und 3 Tangenten sind. Der Mittelpunkt der Strömungsumlenkung ist mit 5 bezeichnet. Ein nicht erweitertes Krümmerelement ist ein Rohrstück, dessen Mittellinie mit der Strömungsumlenkung 4 zusammenfällt. Die Ebene 6 der Strömungsumlenkung fällt mit der Zeichenebene der Figur 1 zusammen.

Der dem Mittelpunkt 5 am nächsten gelegene Wandabschnitt 7 ist, bezogen auf die Ebene 6, entsprechend dem Radius 40 um den Mittelpunkt 5 gekrümmt. Er kann, in Abänderung, auch abschnittsweise um Mittelpunkte gekrümmt sein, die in der Nähe des Mittelpunktes 5 liegen, etwa in dem Gebiet, das durch die strichpunktierte Linie 8 umgeben ist.

Der Wandabschnitt 7 ist der in der Schnittfläche aus Figur 3 unten gelegene Teil. Dieser Wandabschnitt ist nicht begrenzt, er geht fließend in die anderen Wandabschnitte über und das gilt auch für alle anderen Wandabschnitte.

Der dem Wandabschnitt 7 gegenüberliegende Wandabschnitt 9 ist entsprechend dem Radius 43 über ein oder mehrere Krümmungsmittelpunkte gekrümmt, die in dem durch die strichpunktierte Linie 10 umfahrenen Bereich liegen und erheblich gegenüber dem Bereich, der durch die strichpunktierte Linie 8 umgeben ist, nach außen versetzt sind, dies alles bezogen auf die Ebene 6 der Strömungsumlenkung 4. Dadurch entsteht eine Auswölbung 12 und eine entsprechende Ausweitung des Strömungskanals, die sich radial nach außen erstreckt und die, wie aus Figur 3 ersichtlich, auch nach den Seiten fortgesetzt ist. Die an dem außen gelegenen Wandabschnitt 9 beidseitig angrenzenden Wandabschnitte 14, 15 sind zur jeweiligen Seite nach außen gewölbt, und zwar etwas schwächer als der Wandabschnitt 9. Auf diese Weise ergibt sich eine radial nach außen und zur Seite gerichtete Auswölbung und eine entsprechende Erweiterung 24 des Strömungskanals, die umso stärker ist, je stärker in dem betreffenden Bereich die Abriebkräfte normalerweise erwartet werden müssen.

Die einströmende Strömung gemäß Pfeil 3 ist auf einen Wandabschnitt 45 gerichtet, der ein Teil des Wandabschnitts 9 ist. Dieser Wandabschnitt 45 ist deshalb vom Abrieb besonders gefährdet und aus diesem Grunde verstärkt ausgebildet gegenüber den benachbarten Wandabschnitten 9, 14 und 15, wie aus Figur 1 und 3 ersichtlich. Die Wandstärke gemäß dem Pfeil 48 ist demzufolge größer als die Wandstärke gemäß Pfeil 41 und Pfeil 44.

Mit 80 ist ein gegen die Strömung gerichtetes Hemmnis bezeichnet, das in die Erweiterung 24 hineinragt und als innerer Vorsprung des radial auswärts gelegenen Wandabschnittes 9 ausgebildet ist. Das Hemmnis 80 schließt unmittelbar an die Austrittsmuffe 20 an und es entsteht durch das Hemmnis eine Stufe, die den Strömungskanal verengt. Im Bereich dieser Stufe bleibt aber ein kreisrunder Querschnitt für den Strömungskanal — so groß wie der Austrittsquerschnitt gemäß Doppelpfeil 22 — mindestens frei. Das Hemmnis 80 bildet mit dem angrenzenden, radial außen gelegenen Wandabschnitt 9 und den beidseitig angrenzenden, seitlichen Wandabschnitten 14 und 15 eine gegen die Strömung offene Tasche, in der das einströmende Fördergut festgehalten wird, wodurch die angestrebte Ablagerung des Fördergutes in der Erweiterung begünstigt wird, und zwar wird das bei Neubeginn der Förderung zuerst zuströmende Fördergut in der Tasche aufgefangen, so daß von vornherein der gewünschte Abriebschutz gegeben ist, auch wenn die Tasche bei der voraufgegangenen Unterbrechung der Förderung leergelaufen ist.

Das Krümmerelement 1 ist als Stahlgußteil aus Kugelgraphitguß geformt. Bei dem Gußstahl handelt es sich um solchen Stahl, der durch Zusätze an Mangan oder dergleichen hochverschleißfest gemacht ist. Die beiden Anschlüsse sind als Muffen 20 und 21 ausgebildet und mitgegossen und mit Innengewinde 81, 82 ausgestattet. Der Eintrittsquerschnitt gemäß Doppelpfeil 23 ist kreisrund und genauso groß wie der Austrittsquerschnitt gemäß Doppelpfeil 22. In Abänderung des dargestellten Ausführungsbeispiels kann man den Austrittsquerschnitt 22 etwas größer machen als den Eintrittsquerschnitt 23, um der Tatsache Rechnung zu tragen, daß die Strömung innerhalb des Krümmers verlangsamt wird. Eine entsprechende Reduzierung kann man auch bei gleichen Querschnitten durch Einsatz eines Reduzierstückes erzielen.

Die sich in dem Krümmerelement ausbildende Strömung ist durch sich in der Erweiterung 24 ablagerndes Schüttgut begrenzt. Die sich dabei ergebende Begrenzung, die fließend ist, ist durch die gestrichelte Linie 25 angedeutet.

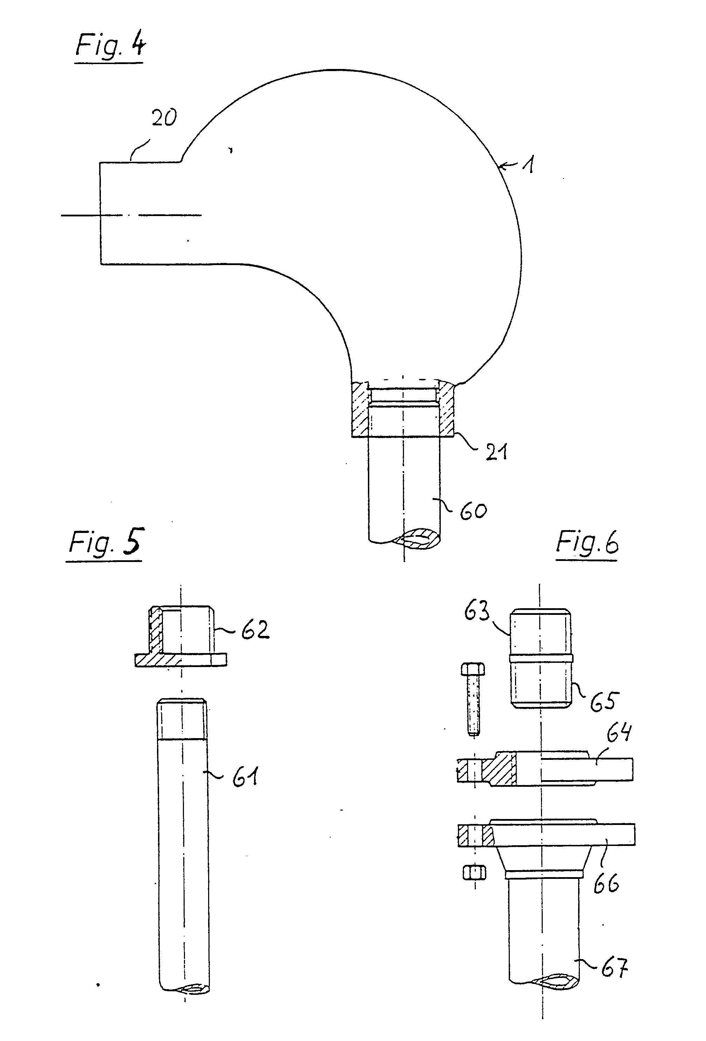

Die beiden Muffen 20 und 21 sind als Schraubmuffen mit Innengewinde ausgestattet, so daß eine Anschlußrohrleitung, wie zum Beispiel das Rohrstück 60 aus Figur 4, durch Anschrauben angesetzt werden kann. Wenn der Ein- oder Austrittsquerschnitt einer Muffe verengt werden soll, um ein engeres Anschlußrohr 61 anzuschrauben, dann wird ein entsprechendes Reduzierstück 62 zwischengesetzt, wie aus Figur 5 ersichtlich. Wenn ein Flanschanschluß gewünscht wird, dann wird ein Versatzstück 63 eingeschraubt, auf dessen freies, mit Gewinde ausgestattetes, aus der Muffe herausragendes Ende 65 dann ein mit Innengewinde versehener Flansch 64 aufgeschraubt werden kann. An diesen Flansch kann dann eine mit einem Gegenflansch 66 ausgestattete Rohrleitung 67 angeflanscht werden.

In Abänderung des dargestellten Ausführungsbeispiels können die Eintrittsöffnung und die Austrittsöffnung auch um die Wandstärke des Anschlußrohrs im Bereich der Innengewinde 81, 82 größer sein, so daß der Strömungskanal vom Inneren des Anschlußrohrs zum Inneren des Krümmers stufenlos übergeht bei angeschraubtem Anschlußrohr.

**Patentansprüche**

1. Krümmerelement für den Einsatz in pneumatisch, rieselfähiges Gut fördernden Anlagen mit zwei Muffen (20, 21) an beiden Enden, die hinsichtlich ihrer Strömungsrichtung um 90 Grad gegeneinander versetzt sind, und mit einem Krümmerbogen zwischen den beiden Muffen, der eine Auswölbung (12) aufweist, die sich, bezogen auf die Ebene (6) der Strömungsumlenkung (4) radial nach außen und zu beiden Seiten erstreckt, dadurch gekennzeichnet, daß der in Verlängerung der einströmseitigen Muffe (21) gelegene Wandabschnitt (45) der Auswölbung (12) verstärkt ist, daß ein gegen die Strömung gerichtetes Hemmnis (80) vorgesehen ist, daß das Hemmnis (80) durch einen inneren Vorsprung eines auswärts gelegenen Wandabschnittes (9) gebildet ist, daß das Hemmnis in die durch die Auswölbung (12) gebildete Erweiterung (24) hineinragt, daß das Hemmnis (80) unmittelbar an die austrittsseitige Muffe (20) anschließt und daß das Hemmnis (80) mit dem auswärts gelegenen Wandabschnitt (9) und beidseitig angrenzenden seitlichen Wandabschnitten (14, 15) eine gegen die Strömung offene Tasche (16) bildet.

2. Krümmerelement nach Anspruch 1, dadurch gekennzeichnet, daß alle Krümmungsmittelpunkte (10) des auf der Außenseite gelegenen Wandabschnitts (9) wesentlich radial nach außen versetzt sind gegenüber dem Krümmungsmittelpunkt (5) des radial innen gelegenen Wandabschnittes (7), und daß der Krümmungsmittelpunkt (5) des radial innen gelegenen Wandabschnittes (7) mit dem Krümmungsmittelpunkt (5) der Strömungsumlenkung (4) zusammenfällt.

3. Krümmerelement nach einem der vorhergehenden Ansprüche, gekennzeichnet durch die Ausgestaltung als einstückiges Gußteil aus hochverschleißfestem Kugelgraphitstahlguß.

4. Krümmerelement nach einem der vorherigen Ansprüche, dadurch gekennzeichnet, daß für einen Anschluß ein einsetzbares Reduzierstück (62) vorgesehen ist.

5. Krümmerelement nach einem der vorhergehenden Ansprüche, dadurch gekennzeichnet, daß der Eintrittsquerschnitt (23) an der eingangsseitigen Muffe (21) kleiner ist als der Austrittsquerschnitt (22) an der ausgangsseitigen Muffe (20).

## Claims

1. Bend member for use in pneumatic installations conveying a free-flowing material with two sleeves (20, 21) at both ends, which are displaced by 90° relative to one another with respect to their flow direction and with a bend curve between the two sleeves having a convexity (12) which, based on the plane (6) of the flow deflection (4) extends radially outwards and to either side, characterized in that the wall portion (45) of the convexity (12) located in the extension of the inflow-side sleeve (21) is reinforced, that an obstruction (80) directed counter to the flow is provided, that the obstruction (80) is formed by an internal projection of an outwardly positioned wall portion (9), that the obstruction projects into the enlargement (24) formed by the convexity (12), that the obstruction (80) connects directly onto the discharge-side sleeve (20) and that the obstruction (80) forms with the outwardly positioned wall portion (9) and lateral wall portions (14, 15) adjacent on either side a pocket (16) open counter to the flow.

2. Bend member according to claim 1, characterized in that all the centres of curvature (10) of the wall portion (9) positioned on the outside are displaced significantly radially outwards with respect to the centre of curvature (5) of the radially inwardly positioned wall portion (7) and that the centre of curvature (5) of the radially inwardly positioned wall portion (7) coincides with the centre of curvature (5) of the flow deflection (4).

3. Bend member according to one of the preceding claims, characterized by the construction as a one-part casting made from highly wear-resistant nodular cast steel.

4. Bend member according to one of the preceding claims, characterized in that an insertable reducing fitting (16) is provided for a connection.

5. Bend member according to one of the preceding claims, characterized in that the inlet cross-section (23) at the intake-side sleeve (21) is smaller than the outlet cross-section (22) at the discharge-side sleeve (20).

## Revendications

1. Elément de tuyau de raccordement, coudé en arc de cercle, utilisé dans les installations de transport pneumatiques de matières coulantes en vrac, à savoir un élément de tuyau de raccordement (coudé en arc de cercle) avec un manchon rectiligne à chacune de ses extrémités, lesdits manchons étant, en ce qui concerne la direction du flux de matières coulantes, en mouvement dans le coude, décalés de 90° l'un par rapport à l'autre, tandis qu'entre deux manchons, il est intercalé un coude en arc de cercle se présentant sous la forme d'une voûte (12) qui, rapportée au plan (6) de la courbe plane (4) de déviation de la direction de l'écoulement du susdit flux, s'étend radialement vers l'extérieur et des deux côtés dudit plan, caractérisé par le fait que le tronçon de paroi (45) de la partie en forme de voûte (12), à savoir le tronçon de paroi situé dans le prolongement du manchon (21) d'entrée est renforcé, qu'il est prévu un obstacle (80) dirigé dans la direction opposée à celle de l'écoulement du flux susdit de matières coulantes en vrac, que l'obstacle (80) est formé par un ressaut intérieur du tronçon de paroi (9) situé en dehors, que l'obstacle prévu déborde à l'intérieur de l'élargissement (24) formé par la partie en forme de voûte (12), que l'obstacle (80) se raccorde directement au manchon (20) de sortie et que l'obstacle (80) avec le tronçon de paroi (9), situé en dehors du coude et les deux tronçons de paroi latéraux, contigus (14, 15), forme une poche ouverte dans la direction opposée à celle du flux qui s'écoule.

2. Elément de tuyau de raccordement coudé en arc de cercle, conforme à la revendication 1, caractérisé par le fait que tous les centres de courbure (10) du tronçon de paroi (9), situé sur la face extérieure sont notablement déplacés radialement vers l'extérieur par rapport au centre de courbure (5) de la courbe plane du tronçon de paroi (7) et que le centre de courbure (5) du tronçon de paroi (7) situé radialement à l'intérieur de ladite courbe coïncide avec le centre de courbure (5) de la courbe (circulaire ou non) enveloppant les directions successives dans lesquelles se déplace le flux (4) susdit de matières coulantes en vrac.

3. Elément de tuyau de raccordement, coudé en arc de cercle, conforme à une des revendications précédentes, caractérisé par le fait que cet élément est fabriqué en une seule pièce et en un métal à très haute résistance, à savoir en acier coulé à graphite sphéroïdal.

4. Elément de tuyau de raccordement, conforme à une des revendications précédentes, caractérisé par le fait qu'il est prévu une pièce de réduction utilisable pour faire un raccord.

5. Elément de tuyau de raccordement, conforme à une des revendications précédentes, caractérisé par le fait que la section transversale d'entrée (23) du manchon (21) du côté de l'entrée est plus petite que la section transversale de sortie (22) du côté du manchon (20) de sortie.

**0 111 589**

Fig. 1

Fig. 2

Fig. 3

## Fig. 4

20

1

21

60

## Fig. 5

62

61

## Fig.6

63

65

64

66

67

2